# EUROPEAN PATENT SPECIFICATION

(11) **EP 0 667 979 B1**
(45) Date of publication and mention of the grant of the patent: **21.08.1996**
(21) Application number: 94900368.5
(22) Date of filing: 21.10.1993
(51) Int. Cl.: G11B 5/704, G11B 5/64

(54) **BACKSIDE COATING FOR MAGNETIC RECORDING MEDIUM**
RÜCKSEITIGE BESCHICHTUNG FÜR EIN MAGNETISCHES AUFZEICHNUNGSMEDIUM
REVETEMENT DE LA FACE ARRIERE D'UN SUPPORT D'ENREGISTREMENT MAGNETIQUE

(30) Priority: 06.11.1992 JP 296982/92
(43) Date of publication of application: 23.08.1995
(73) Proprietor: MINNESOTA MINING AND MANUFACTURING COMPANY, St. Paul, Minnesota 55133-3427 (US)
(72) Inventor: MIZUTANI, Horokazu, Sagamihara-City, Kanagawa Prefecture (JP); OHKUBO, Takatoshi, Sagamihara-City, Kanagawa Prefecture (JP)
(74) Representative: VOSSIUS & PARTNER
(86) International application number: US9310083
(87) International publication number: WO9411866

(56) References cited:
- EP-A- 0 464 827
- US-A- 5 134 027
- DATABASE WPI Week 8523, Derwent Publications Ltd., London, GB; AN 85-136242 & EP,A,0 143 337 (SONY CORP) 5 June 1985

## Description

### BACKSIDE COATING FOR MAGNETIC RECORDING MEDIUM

### Field of the Invention

This invention relates to a back coating for a magnetic recording medium having improved aging stability during storage. This invention relates also to a magnetic recording medium having a backside coating layer using such a back coating and excellent in travelling durability and electromagnetic conversion characteristics.

### Background of the Invention

Conventionally, a back coating layer has been provided to the back of a magnetic recording medium in order to improve travelling durability of the magnetic recording medium.

Non-magnetic inorganic powder and carbon black in the form of fine particles or coarse particles have been used for this back coating but in such a case, flocculation of non-magnetic inorganic powder and carbon black is likely to occur during storage of the back coating. When a magnetic recording medium is produced by the use of such a degraded back coating, travelling durability and electromagnetic conversion characteristics are likely to deteriorate in the resulting magnetic recording medium.

Japanese Unexamined Patent Publication (KOKAI) No. 61-145726 describes that when a resin containing a sulfonic acid metal salt group and a hydroxyl group is used as a binder component for a back coating layer, dispersion of non-magnetic powder becomes easier than in the prior art, and a back coating layer having excellent smoothness can be formed.

However, this reference considers only easy dispersibility but does not describe the selection of binders from the aspect of dispersion stability with time of a back coating comprising carbon black, a nitrocellulose resin and a polyurethane resin.

Accordingly, the present invention aims at providing a back coating having high dispersion stability with time or in other words, high shelf life stability, and a magnetic recording medium using such a back coating.

Particularly when a coating is prepared by the use of a batch mill and is applied, there is often the case where the coating must be stored for a long time, and shelf life stability of the coating is very important in such a case.

### Summary of the Invention

As a result of intensive studies, the inventors of the present invention have found out that the object described above can be accomplished by using, as a binder, a polyurethane resin having the following properties (1) to (3) in a back coating for a magnetic recording medium containing carbon black as a filler, and a nitrocellulose resin and a polyurethane resin as a binder:
(1) the binder comprises an aliphatic polyester or polyether diol component;
(2) it contains a sulfonic acid metal salt group in its backbone chain; and (3) its Tg is from -23°C to 25°C.

Accordingly, the present invention provides a back coating for a magnetic recording medium containing carbon black, a nitrocellulose resin and a polyurethane resin, characterized in that the polyurethane resin is derived from an aliphatic polyester diol or an aliphatic polyether diol, and contains a sulfonic acid metal salt group inside the backbone chain thereof, and its Tg is from -23°C to 25°C.

### Detailed Description of the Invention

An aliphatic polyester diol or aliphatic polyether diol may be used either alone or as a mixture, and an aromatic polyester diol or polyether diol may be further mixed so long as the control of Tg is easy and can be controlled to not higher than 25°C. If a polyester diol or polyether diol containing an aromatic ring is used alone, the molecular chain of the polyurethane resin becomes excessively hard and its Tg rises, so that it becomes difficult to control Tg of the polyurethane resin to not higher than 25°C as the essential requirement of the present invention.

More definitely, it has been found out that if an aliphatic diol accounts for more than 50 mol% of the total diol content, a preferred effect can be obtained in the present invention.

By using a sulfonic acid metal salt group exists in the backbone chain, a polarity occurs and the same effect as the use of a dispersant can be obtained. For this reason, the use of the dispersant becomes unnecessary, or the amount of use of the dispersant can be reduced remarkably. This is advantageous not only for the production process but also for the improvement of smoothness of the back coating layer. Eventually, therefore, the electromagnetic conversion characteristics of the magnetic recording medium can be improved.

When particles of non-magnetic inorganic powder and carbon black are dispersed in a solvent by the use of a polymer such as the polyurethane resin, the polymer is generally absorbed to the surface of the particles and forms an adsorption layer, and this adsorption layer stabilizes dispersion.

If the molecular chain of the polymer is too hard, the volume of the adsorption layer becomes great, but the density of the adsorption layer is likely to become small.

If Tg is low and the chain of the polymer is too soft, on the contrary, the density of the adsorption layer becomes great but its volume is likely to become small.

To obtain high aging stability of the dispersion system of the polymer and the particles of non-magnetic inorganic powder and carbon black, therefore, the volume of the polymer adsorption layer adsorbed to the particle surface and its density must have suitable values.

If the volume of the polymer adsorption layer is too small, the distances between the dispersed particles are small, the particles are likely to come excessively close to one another, flocculation occurs due to the attraction between the particles and dispersion is likely to collapse.

On the other hand, the decrease of the density of the polymer adsorption layer allows the polymer adsorption layers on the adjacent particle surfaces to easily superpose with one another and after all, the particles cannot be spaced apart stably from one another and flocculation is likely to occur.

The studies made by the present inventors reveal that an optimum range of Tg of the polyurethane resin for acquiring aging stability of the coating dispersing carbon black in the polymer comprising the polyurethane resin is from -23°C to 25°C.

The polyurethane resin Tg of which is less than -23°C has low wear resistance and is not preferable from the aspect of durability of the back coating layer.

Furthermore, the present invention is characterized by the use of carbon black because carbon black in the fine particle form is effective for reducing surface electric resistance, and the drop of the surface electric resistance is an essential requirement for preventing drop-out of the magnetic particles.

The present invention uses nitrocellulose in order to improve durability of the back coating layer under a high temperature and high humidity condition.

Hereinafter, the present invention will be explained in further detail. The aliphatic polyester diol that can be utilized for the synthesis of the polyurethane resin used in the present invention can be obtained by the condensation reaction between 1,4-butanediol or 1,6-hexanediol and an aliphatic dibasic acid such as adipic acid or pimelic acid, or by the ring opening polymerization reaction between δ-valerolactone or caprolactone and the diol described above.

The aliphatic polyether diol can be obtained by the ring opening addition reaction between ethylene oxide or polypropylene oxide and the aliphatic diol described above, or the ring opening polymerization of tetrahydrofuran under the presence of a Lewis acid catalyst.

The diisocyanate of the polyurethane resin starting material (MDI, TDI, hydrogenated MDI, etc.) used in the present invention is not particularly limited, and commercially available materials can be used.

At least one kind of carbon black can be used in the present invention. Preferably, however, fine particles and coarse particles are used in combination.

More definitely, particles having a mean particle size of 10 to 30 nm can be used as the fine particles, and an example of the fine particles is "Carbon Black MA7" (a product of Mitsubishi Kasei Kogyo K.K., particle size = 24 nm, pH 3.0). Coarse particles have a mean particle size of 150 to 1,000 nm, and definite examples include carbon black, CaCO₃ TiO₂ ZnO Cr₂O₃ and α-Al₂O₃.

The weight ratio between the fine particles and the coarse particles is preferably within the range of 99.9 : 0.1 to 70 : 30. When the weight ratio of the fine particles exceeds 99.9, travelling durability drops and when it is less than 70, on the contrary, electromagnetic conversion characteristics drop.

The nitrocellulose resin is one of the cellulose ester resins. It is not particularly limited, and commercial products can be used in the present invention.

One of the definite examples is "Celline FM-200" (a product of Daicell Kagaku Kogyo K.K.).

In the present invention, the blend ratio between carbon black and the binder is preferably within the range of from 30/70 to 70/30 in terms of the weight ratio. If the blend ratio of carbon black is less than 30, the reduction of the frictional coefficient becomes insufficient and if it exceeds 70, on the contrary, durability of the back coating layer is likely to drop.

The mixing weight ratio between the nitrocellulose resin and the polyurethane resin is preferably from 20/80 to 80/20 and particularly preferably, from 60/40 to 70/30.

If the amount of the nitrocellulose resin is less than 60 in the range described above, tackiness increases under a high temperature and high humidity condition, and durability deteriorates. On the other hand, if it exceeds 70, tackiness with the substrate becomes low after coating and the back coating layer is likely to easily peel.

It is necessary in the back coating of the present invention to further add a polyisocyanate compound as a cross-linking agent.

The term "polyisocyanate" hereby used means oligomer compounds containing at least three isocyanate groups and obtained from the reaction between diisocyanate and a lower molecular weight triol, for example, and trimer or tetramer compounds of diisocyanate.

Definite examples of such polyisocyanates include "SBU-0856" (a product of Sumitomo Bayer K.K.), "C-8041" (a product of Nippon Polyurethane K.K.), "PAPI-135" (a product of MD Kasei K.K.), "Millionate MR100" (a product of Nippon Polyurethane K.K.), and so forth.

The proportion of the polyisocyanate to the binder resin is from 10 to 70 wt% and preferably, from 15 to 50 wt%.

Preferably, the polyisocyanate is mixed with the backside coating immediately before the coating operation is carried out, from the aspect of the process and easiness of the reaction control.

It is further possible to add customary additives, e.g., lubricants such as aliphatic acid and aliphatic esters, cross-linkage promoting catalyst such as dibutyltin laurate, and so forth, to the back coating of the present invention.

The solvents for the back coating are ethanol, methyl ethyl ketone, toluene, cyclohexane, tetrahydrofuran, and so forth. They are used either alone or as a mixture.

The back coating layer of the present invention can be prepared by dispersing uniformly the components other than the polyisocyanate cross linking agent by a customary mixing apparatus such as a sand mill in a predetermined solvent. The production can be carried out stage-wise by dividing the starting materials into two or more groups.

Next, the present invention will be explained in further detail with reference to Examples thereof.

### Example 1

| Composition | |
|---|---|
| Composition 1 | |
| Carbon black (MA 7, a product of Mitsubishi Kasei Kogyo K.K., particle size 24 nm, pH 3.0) | 100 parts by weight |
| | |
| Nitrocellulose resin (Celline FM-200, a product of Daicell Kagaku Kogyo K.K.) | 57 parts by weight |
| | |
| Methyl ethyl ketone | 334 parts by weight |
| | |
| Toluene | 167 |
| | |
| Cyclohexanone | 56 |
| | |

| Composition 2 | |
|---|---|
| Sodium sulfonate group (hereinafter called "-SO₃Na")-containing polyurethane resin (#1) ("Bilon UR-8700, a product of Toyobo K.K.) | 23 parts by weight |
| | |
| Methyl ethyl ketone | 285 |
| Toluene | 142 |
| Cyclohexanone | 47 |

The Composition 1 described above was stirred for about one hour and was dispersed by a sand mill, and after Gloss of at least 130 was reached, the Composition 2 was added to the Composition 1 and the mixture was further treated for four hours by the sand mill to obtain a backside coating.

### Example 2

Carbon black #45 of Mitsubishi Kasei Kogyo K.K. (particle size 24 nm, pH 8.0) was used as the carbon black of the Composition 1 of Example 1, and after this Composition 1 was stirred for about one hour, it was dispersed by a sand mill. After Gloss of at least 90 was reached, the Composition 2 was added and the mixture was further treated for four hours by the sand mill to obtain a back coating.

### Example 3

A back coating was obtained by following the same procedures as in Example 1 except that -SO₃Na-containing polyurethane resin (#2) (a product of Toyobo K.K., Bilon UR-8300) was used in place of the polyurethane resin (#1) of the Composition 2 of Example 1.

### Example 4

A back coating easily obtained by following the same procedures as in Example 2 except that -SO₃Na- containing polyurethane resin (#2) (a product of Toyobo K.K., Bilon UR-8300) was used in place of the polyurethane resin (#1) of the Composition 2 of Example 1.

### Comparative Example 1

A back coating was obtained by following the same procedure as in Example 1 except that a polyurethane resin (#3) not containing -SO₃Na (a product of the BF Goodrich Co., ESTANE 5703) was used in place of the polyurethane resin (#1) of the Composition 2 of Example 1.

### Comparative Example 2

A back coating was obtained by following the same procedures as in Example 1 except that a -SO₃Na- containing polyurethane resin (#4) (a product of Toyobo K.K., Bilon UR-8200) is used in place of the polyurethane resin (#1) of the Composition 2 of Example 1.

### Comparative Example 3

A back coating was obtained by following the same procedures as in Example 2 except that a -SO₃Na- containing polyurethane resin (#4) (a product of Toyobo K.K., Bilon UR-8200) is used in place of the polyurethane resin (#1) of the Composition 2 of Example 2.

### Evaluation of back coating by 45° Gloss

Dispersion stability with time of each of the back coatings prepared in Examples 1 to 4 and Comparative Examples 1 to 3 was evaluated by the change with time of 45° Gloss.

A small amount of each back coating was taken out under a stationary state and was coated onto one of the surfaces of a 14 µm-thick PET (polyethylene terephthalate) film to prepare a sample, and 45°-45° gloss was measured using a gloss meter produced by Nippon Denshoku Kogyo K.K. The higher the smoothness, the higher became the gloss value. The higher the degree of flocculation in the coatings, the lower became the gloss value. In the backside coatings having excellent stability with time, flocculation of carbon with time was suppressed. Therefore, the samples coated with such coatings remained smooth and had a high gloss value irrespective of the passage of time. On the other hand, flocculation of carbon increased with time in the coatings having inferior stability with time. Therefore, the surface of the samples coated with such coatings became coarse and the gloss value decreased.

The results are tabulated in Table 1.

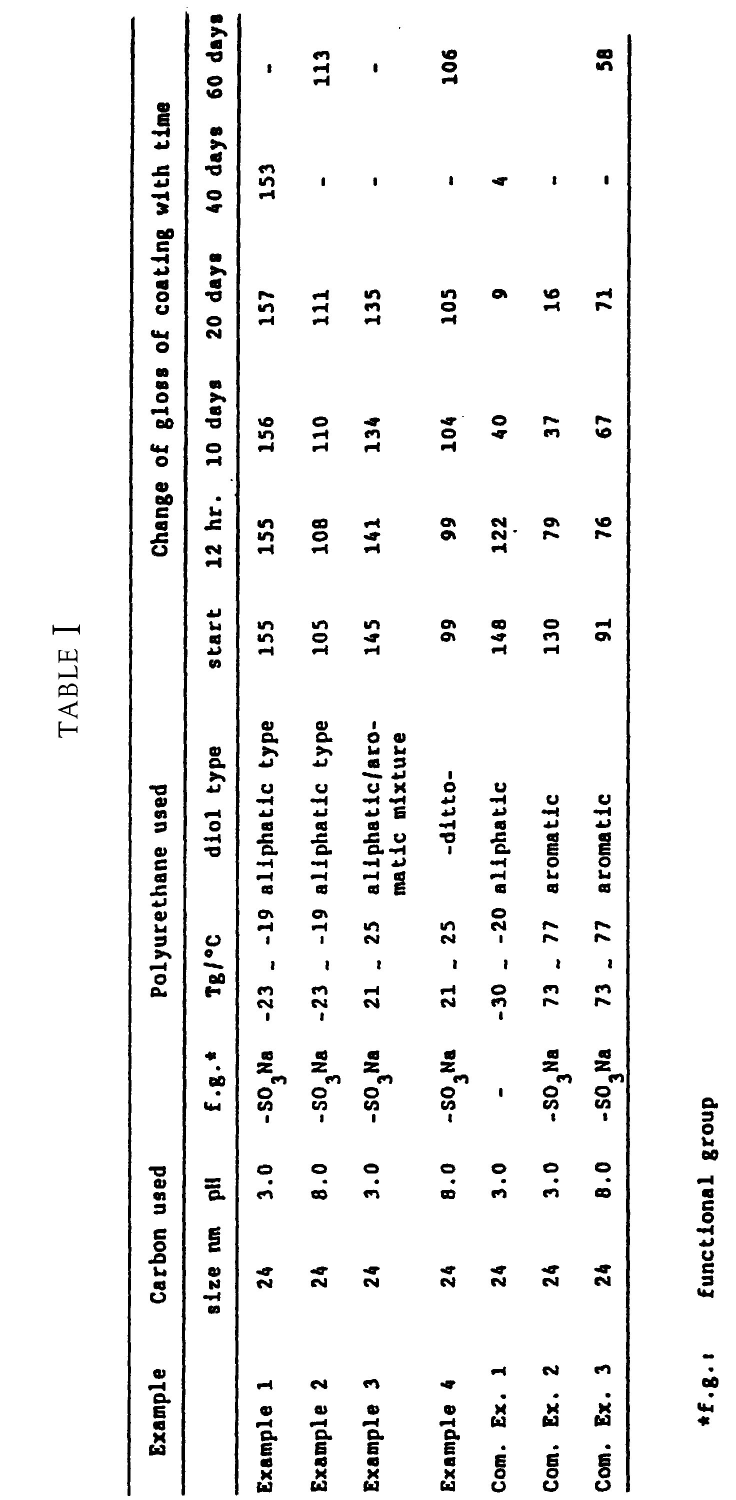

## Claims

1. A back coating for a magnetic recording medium containing carbon black, a nitrocellulose resin and a polyurethane resin, characterized in that said polyurethane resin is derived from an aliphatic polyester diol or an aliphatic polyether diol, and contains a sulfonic acid metal salt group inside the backbone chain thereof, and its Tg is from -23°C to 25°C.

2. A magnetic recording medium characterized by including a back coating layer formed from said coating of Claim 1.

## Patentansprüche

1. Beschichtung einer Rückseite für ein magnetisches Aufzeichnungsmedium, enthaltend Ruß, ein Nitrocelluloseharz und ein Polyurethanharz, dadurch gekennzeichnet, daß das Polyurethanharz von einem aliphatischen Polyesterdiol oder einem aliphatischen Polyetherdiol abgeleitet ist, und in dessen Hauptkette eine Metallsalzsulfonsäuregruppe enthält und seine Tg -23°C bis 25°C beträgt.

2. Magnetisches Aufzeichnungsmedium, dadurch gekennzeichnet, daß es eine Schicht mit einer Beschichtung der Rückseite, die aus der Beschichtung des Anspruchs 1 erzeugt wird, umfaßt.

## Revendications

1. Revêtement de fond pour un milieu d'enregistrement magnétique contenant du noir de carbone, une résine de nitrocellulose et une résine de polyuréthanne, caractérisé en ce que ladite résine de polyuréthanne est dérivée d'un diol aliphatique polyester ou d'un diol aliphatique polyéther et contient un groupe sel métallique d'acide sulfonique au sein de sa chaîne d'édifice de base et sa Tg va de -23 à 25°C.

2. Milieu d'enregistrement magnétique, caractérisé par l'incorporation d'une couche de revêtement de fond formée à partir dudit revêtement de la revendication 1.
